(19) **Europäisches Patentamt / European Patent Office / Office européen des brevets**

(11) **EP 1 634 282 B1**

(12) **EUROPEAN PATENT SPECIFICATION**

(45) Date of publication and mention
of the grant of the patent:
**30.11.2011 Bulletin 2011/48**

(21) Application number: **04733407.3**

(22) Date of filing: **17.05.2004**

(51) Int Cl.:
*G11B 7/24* $^{(2006.01)}$　　　*G11B 7/26* $^{(2006.01)}$

(86) International application number:
**PCT/IB2004/001710**

(87) International publication number:
**WO 2004/107329 (09.12.2004 Gazette 2004/50)**

(54) **MULTI-STACK OPTICAL STORAGE MEDIUM**

OPTISCHES DATENSPEICHERMEDIUM MIT MEHREREN AUFZEICHNUNGSSCHICHTEN

MILIEU OPTIQUE DE STOCKAGE A PILES MULTIPLES

(84) Designated Contracting States:
**AT BE BG CH CY CZ DE DK EE ES FI FR GB GR HU IE IT LI LU MC NL PL PT RO SE SI SK TR**

(30) Priority: **28.05.2003 EP 03300020**

(43) Date of publication of application:
**15.03.2006 Bulletin 2006/11**

(73) Proprietor: **Koninklijke Philips Electronics N.V.
5621 BA Eindhoven (NL)**

(72) Inventors:
• **MARTENS, Hubert,
Société Civile SPID
F-75008 Paris (FR)**
• **VLUTTERS, Ruud,
Société Civile SPID
F-75008 Paris (FR)**

(74) Representative: **van Liempd, Jan et al
Philips
Intellectual Property & Standards
P.O. Box 220
5600 AE Eindhoven (NL)**

(56) References cited:
EP-A- 1 067 535　　　EP-A- 1 174 868
WO-A-03/083845　　　WO-A-03/107334
WO-A-2004/021336　　WO-A-2004/042717
US-A1- 2002 150 030

• PATENT ABSTRACTS OF JAPAN vol. 017, no. 408 (P-1582), 29 July 1993 (1993-07-29) -& JP 05 073955 A (VICTOR CO OF JAPAN LTD), 26 March 1993 (1993-03-26)
• PATENT ABSTRACTS OF JAPAN vol. 1999, no. 08, 30 June 1999 (1999-06-30) -& JP 11 066622 A (TAIYO YUDEN CO LTD), 9 March 1999 (1999-03-09)

## Description

### Field of the invention

The invention relates to a multi-stack optical storage medium. The invention also relates to a method of manufacturing such an optical storage medium.

The invention is particularly relevant for a dual-stack write-once optical storage medium using the DVD format.

### Domain of the invention

EP 1 067 535 A describes an information recording medium having an entrance face and a reflective layer. A recording layer may be compared to the "higher recording layer $L_0$" of the present invention. An arrangement of a "second recording layer" with a "reflective film layer" may be compared to the "lower recording stack" of the present invention.

JP 05 073955 A describes a cross-section of an optical recording medium disc composed of a transparent substrate, a tracking groove, a single recording layer, a metallic reflecting layer, and a protecting layer.

US 2002/150030 A1 describes an optical information recording medium having a transparent substrate, a single recording layer, a reflecting layer, and a protective layer.

EP 1 174 868 A2 describes a recordable storage medium having a highly reflective thin film layer and a partially reflective thin film layer, wherein both layers serve as information layers. In addition, a rewritable DVD-RW and a rewritable DVD+RW, each having a single rewritable layer made of a phase change material, are described.

WO 03/083845 A, WO 03/107334 A, WO 2004/042717 representing prior art according to Art. 54(3) EPC disclose write-once dual layer DVD discs with recording layers containing organic dye. WO 2004/021336 A describes an dual layer DVD disc with an azo dye upper recording layer of 80nm on-groove-thickness.

Recently the Digital Versatile Disk (DVD) has gained market share as a medium with much higher data storage capacity than the CD. Presently, this format is available in a read-only (ROM), a recordable or a write-once (R) and a rewritable (RW) version.

A write-once or rewritable optical storage medium like a DVD comprises a recording stack comprising a recording layer. Recording of information in the optical storage medium occurs by locally modifying the optical properties of the recording layer with an intense laser beam. The recorded parts are usually referred to as pits or marks. An issue for both the write-once and the rewritable DVD format is the limited capacity and resulting recording time, because only single-stacked media are present with a maximum capacity of 4.7 GB.

A DVD-video, which is a ROM disk, dual-stack medium with 8.5 GB capacity, often referred to as DVD-9, already has a considerable market share, but information cannot be written on such DVDs.

Consequently, write-once DVDs with at least two stacks, which provide a capacity around 8.5 GB, are highly desired.

A problem raised by a dual-stack write-once optical storage medium is that the recording of data inevitably introduces local variations in the optical properties of the recording stacks. When accessing a recording stack through a written higher recording stack, the local variations in optical properties of the higher recording stack may deteriorate the focused optical beam used for reading and writing of the lower recording stack. If the aberrations introduced by the higher recording stack are too severe, writing and/or reading of the lower stacks may become impossible or of unacceptable quality.

Among the conditions which must be fulfilled by the stacks of the optical storage medium in order to limit the aberrations introduced by a higher recording stack to an acceptable level, is a reduction of the phase difference of the light transmitted through written and unwritten parts of the higher recording stack.

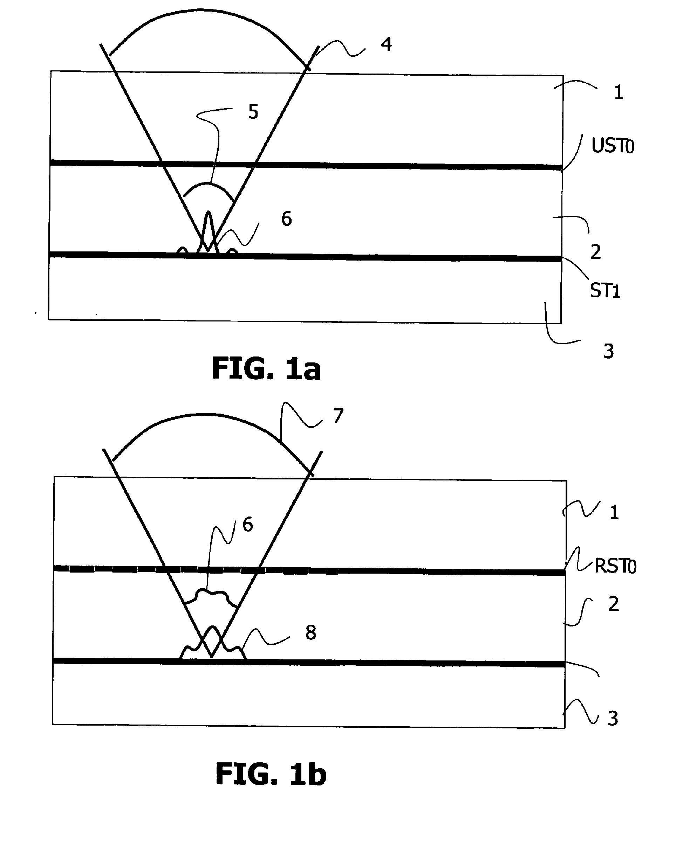

Figs. 1a and 1b show an optical storage medium comprising a higher recording stack $UST_0$, $RST_0$ and a lower recording stack $ST_1$. The recording layer of the lower recording stack $ST_1$ is being recorded or read back by a laser beam 4, which is focused on said lower recording stack $ST_1$. Said laser beam 4 has a wave front 5, 7 and a focal spot 6, 8. In Fig. 1a, in which the higher recording stack $UST_0$ is unrecorded, the focused laser beam 4 does not present any aberration of its wave front 5 or focal spot 6. In Fig. 1b, in which the higher recording stack $RST_0$ contains recorded data, the focused laser beam 4 shows some aberrations in its wave front 7 and in its focal spot 8.

A write-once DVD (DVD-R) with two recording stacks is disclosed in the Japanese patent application published on the 13th of April 2001 with the publication number 2001-101709. Said recording stacks have a so-called MIM structure, which comprises a top thin metal recording layer M, an interference layer I, and another thin metal layer M. The solution proposed ensures that, using a focused laser beam with a wavelength $\lambda$, the phase difference of the light transmitted through written and unwritten parts of the higher recording stack is always less than 10 degrees or equivalently less than 0.02 times $\lambda$, which is obtained by making a recording layer sufficiently thin. For example, using a wavelength of 655 nm, the optical thickness of the first recording layer, which is equal to the product of the refractive index and the thickness of the first recording layer, must be less than 13 nm.

The main drawback of this solution is that the manufacture of such a thin metal recording layer is quite difficult.

EP 1 187 119 A2 discloses an information recording medium including a first information layer and a second information layer. The first information layer includes a first recording layer in which a reversible phase change is caused between a crystalline phase and an amorphous phase by irradiation of a laser beam or application of current. The second information layer includes a second recording layer in which a reversible phase change is caused between a crystalline phase and an amorphous phase by the irradiation of the laser beam or the application of the current. The first recording layer is made of a first material, the second recording layer is made of a second material, and the first material is different from the second material. The recording medium thereby has the BluRay format. Due to the very thin recording layer and the necessary sputtering step the manufacture of the recording medium is again quite difficult and cost intensive.

**Summary of the invention**

The object of the invention is to provide a solution for implementing an optical storage medium with at least two recording stacks which is easier to manufacture

This is achieved with an optical storage medium according to independent claim 1.

According to the invention, an optical storage medium is provided which ensures that, using a focused radiation beam with a wavelength $\lambda$, data recording of the higher recording layer will not modify optical properties of the radiation beam to such an extent that recording or reading back of a lower recording stack will be deteriorated. In particular, the optical storage medium in accordance with the invention ensures that the radiation beam is transmitted through a zone of the higher recording layer comprising recorded and unrecorded areas with a local wave front phase variation $\Delta\Phi$ which always remains within the range of [0.03$\lambda$, 0.125$\lambda$]. The higher recording layer has a thickness $d_R$ and a refractive index $n_R$. In the optical storage medium in accordance with the invention, a recording of the higher recording layer causes a change of optical thickness, which is a product of said thickness $d_R$ and said refractive index $n_R$ of the higher recording layer. The local wave front phase variation $\Delta\Phi$ can be estimated by realizing that it is mainly the change in optical thickness $\Delta(n_R. d_R)$ of the higher recording layer that results in a phase difference in transmission. Thus, the following equation $EQ_1$ is obtained:

$$\Delta\Phi = \Delta(n_R. d_R) \approx \Delta n_R. d_R + n_R. \Delta d_R \qquad (EQ_1)$$

The higher recording layer comprises a recording material which is, for example, an organic dye material. It should be noted that for organic dye materials, data recording is mainly induced by a change (decrease) of the refractive index $\Delta n_R$. Therefore, equation $EQ_1$ reduces to equation $EQ_{1B}$:

$$\Delta\Phi = \Delta n_R. d_R \qquad (EQ_{1B})$$

In both cases, the condition imposed on $\Delta\Phi$ is fulfilled by choosing an appropriate thickness $d_R$ of the higher recording layer.

If we consider a focused radiation beam having a wavelength $\lambda$ being transmitted through a higher recording layer containing recorded data, the upper limit on $\Delta\Phi$ of 0.125$\lambda$ can be derived as follows. The Maréchal criterion states that a focal spot remains "diffraction limited" if the root-mean-square (RMS) wave front error $We_{RMS} = \sqrt{|\langle \underline{w}\rangle^2 - \langle \underline{w^2}\rangle|}$ that is introduced by the local wave front phase variations $\Delta\Phi$ is less than 0.072$\lambda$. In a recorded area, a fraction x of the recording layer contains marks; typically $1/6 \leq x \leq 1/4$. When a wave front is transmitted through a recording layer containing recorded data, each recorded mark introduces a phase shift $\Delta\Phi$ to the part of the wave front that is incident on the mark. When averaged over the total wave front, the RMS wave front error becomes $We_{RMS} = \Delta\Phi.\sqrt{(x-x^2)}$. A conservative estimate of the maximum allowed $\Delta\Phi$ is obtained by taking x = 1/4 and this results in $\Delta\Phi \leq 0.072\lambda/\sqrt{(3/16)}$, i.e. $\Delta\Phi \leq 0.125\lambda$. The lower limit for $\Delta\Phi$ is determined by considerations on modulation. Modulation stands for the maximum amplitude of the signals coming from the disc. Modulation of the signal is defined as the difference between the highest signal level and the lowest signal level, normalized by the highest signal level coming from the disk. For a recording material like an organic dye material, in which the refractive index is changed by a recording process, it turns out that when $\Delta\Phi$ is less than 0.03$\lambda$, the modulation becomes too weak for allowing a reliable read-back of the recorded disk.

It should be noted that the optical thickness $\Delta(n_R. d_R)$ of the higher recording layer is preferably chosen in the range of values [0.05$\lambda$, 0.09$\lambda$], most preferably chosen in the range of values [0.06$\lambda$, 0.08$\lambda$], for example equal to 0.073$\lambda$, because these values give the best compromise between modulation of the signal and local wave front phase variation.

A consequence of the above-mentioned condition for the local wave front phase change is that the higher recording layer of the optical storage medium in accordance with the invention does not need to be as thin as the one used in the MIM structure in accordance with the prior art. Said higher recording layer is thus easier to manufacture. Using, for example, an organic dye material having a refractive index of 2.2 in unrecorded areas and of 1.6 in recorded areas of the higher recording layer, an optical storage medium in accordance with the invention using the DVD format, that is with a radiation beam having a wavelength of approximately 655 nm, must have a higher recording layer thickness $d_R$ in the range 28 nm $\leq d_R \leq$ 115 nm.

According to the invention, said higher recording layer ($L_0$) is made of an organic dye material. An advantage of the use of a higher recording layer made of an organic dye over a higher recording layer made of thin metal is that organic dyes require lower temperatures (200-300 °C) than thin metal films (at least 300-400°C) to achieve recording. Moreover, organic dyes have a very low heat conductivity, that is they lose their heat at a comparatively low rate, whereas metals have high heat conductivity and thus lose heat at a higher rate. The higher recording stack structure according to the invention therefore requires a lower recording power than does the MIM stack structure. For example, at 1X speed, that is the standard speed of 3.49 m/s for DVDs, organic dye materials typically require less than 10 mW, whereas the MIM structure requires 12 mW. Said higher recording layer is therefore less power consuming, which is advantageous for portable applications.

In an embodiment of the invention, the higher recording stack ($ST_0$) comprises a thin metal reflector layer ($M_0$). Compared with the MIM structure of the higher recording stack used in the prior art, only one thin metal layer is used in the optical storage medium in accordance with the embodiment of the invention, which allows a higher transmission of the laser light, that is a greater fraction of light that can go through the higher recording stack and reach the lower recording stack.

In another embodiment of the invention, said thin metal layer is made of an Ag alloy, whereas the MIM structure comprises almost pure Au. The higher recording stack structure used by the optical storage medium in accordance with the invention is therefore cheaper.

## Brief description of the drawings

The invention will be further described with reference to the accompanying drawings:

- Fig. 1a shows a laser beam focused on the lower recording layer and passing through the unrecorded higher recording layer of an optical storage medium,
- Fig. 1b shows a wave front aberration produced by a laser beam focused on the lower recording layer when passing through the higher recording layer of an optical storage medium, said higher recording layer comprising recorded data.
- Fig. 2 shows a schematic layout of a dual-stack optical storage medium according to the invention,
- Fig. 3a shows a detailed structure of the higher recording stack,
- Fig. 3b illustrates differences in optical path for light transmitted through an empty groove, an empty land, or a recorded groove of the higher recording layer,
- Figs. 4a and 4b show the optical constants of AZO and cyanine organic dye materials as functions of the wavelength,
- Fig. 5 shows the modulation as a function of the product of the refractive index variation and the thickness of the higher recording layer,
- Fig. 6 shows a diagram indicating jitter measurements of data read back from the lower recording layer through the partially recorded higher recording layer.

## DETAILED DESCRIPTION OF THE INVENTION

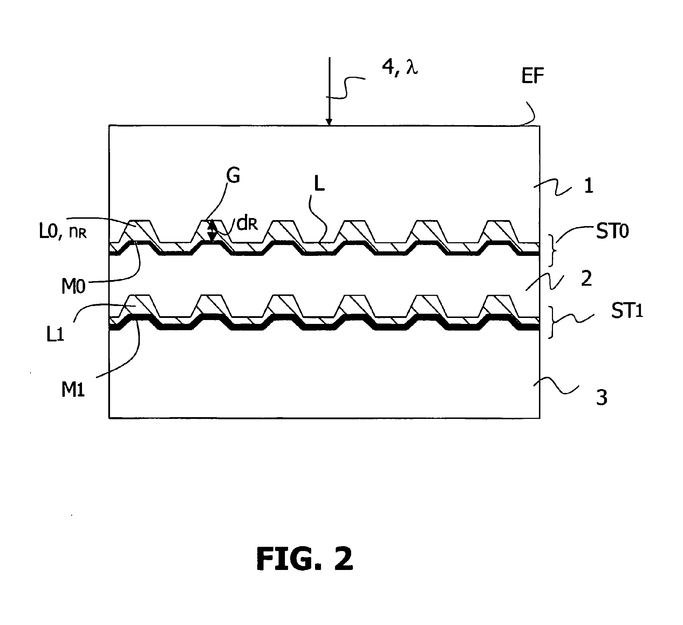

An optical storage medium in accordance with the invention is shown in Fig. 2. Said optical storage medium comprises below an entrance face EF a substrate 1, a higher recording stack $ST_0$, a spacer layer 2, a lower recording stack $ST_1$, and a second substrate 3. The higher recording stack $ST_0$ comprises a higher recording layer $L_0$ and a thin metal reflector layer $M_0$. The lower recording stack $ST_1$ comprises a lower recording layer $L_1$ and a thick metal reflector layer $M_1$.

According to the invention, the higher recording layer $L_0$ is made of an organic dye having a refractive index $n_R$ and a variation $\Delta n_R$ of refractive index between unrecorded and recorded parts of the layer $L_0$. This is not limitative, however, because the higher recording layer $L_0$ may equally well be made of any recording material in which the recording process is based on a change in its refractive index.

It should be noted as well that, although in this embodiment of the invention the recording stack only comprises one recording layer $L_0$ and one thin metal layer $M_0$, the invention also applies to more complicated recording stacks.

Said organic dye material enables write-once data recording, as it is deteriorated by the recording process in such a way that data recording cannot be repeated. Consequently the first embodiment of the invention relates to a write-once optical storage medium. It should be noted, however, that the invention also concerns a rewritable optical storage medium, wherein the higher recording layer is made of a rewritable material, such that data recording causes a change in optical thickness of said rewritable material.

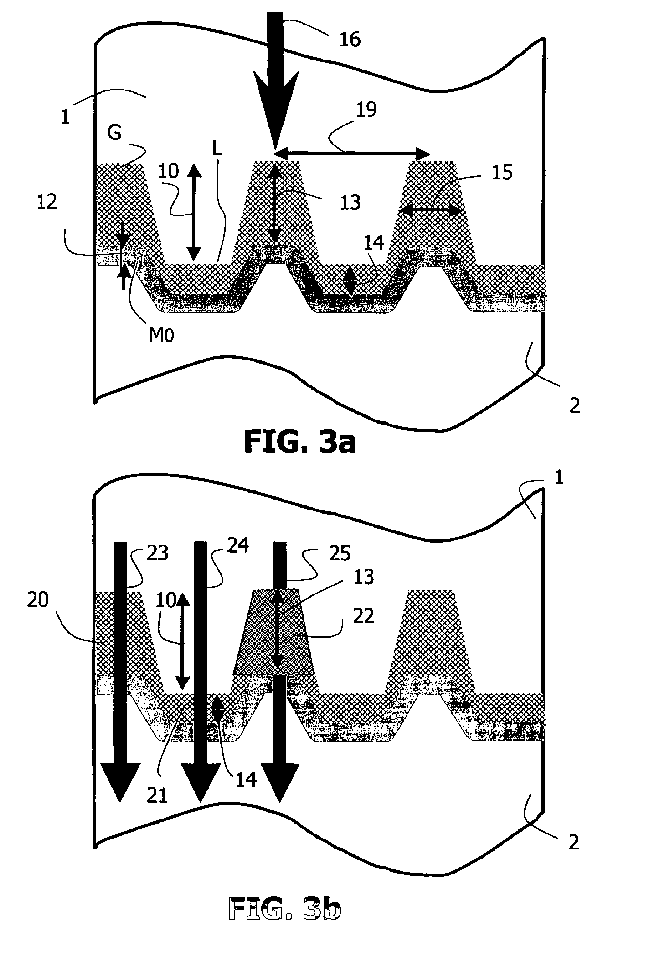

Fig. 3a shows the structure of the higher recording stack $ST_0$ in accordance with an embodiment of the invention. The organic dye material is, for example AZO or cyanine dye. The higher recording layer $L_0$ is applied to the transparent pre-grooved substrate 1. The substrate 1 has a thickness value preferably lying within the range [0.30 mm, 1.2 mm], for example equal to 0.575 mm. It should be noted that a smaller range of authorized thickness values of [0.56 mm, 0.60 mm] is preferably used for DVDs.

The higher recording layer $L_0$ comprises grooves G and lands L. A groove G has, for example, a depth 10 of 160 nm and a width 15 of 320 nm. The distance between two grooves, also called track pitch 19, preferably equals 740 nm. The higher recording layer $L_0$ usually comprises at least two different values of its thickness $d_R$, which are a thickness on groove 13 of, for example, 60, 80, or 100 nm (upper limit is 115 nm), and a thickness on land 14 of 15, 25, or 40 nm. The thin metal layer $M_0$ has a thickness value 12 preferably in the range of [5 nm, 25 nm] and, for example, equal to 12 nm. An arrow 6 indicates the direction and position of the focused laser beam used for recording and reading the optical storage medium. For recordable DVDs, the focused laser beam has a wavelength $\lambda$ approximately equal to 655 nm and a numerical aperture NA equal to 0.65. The transparent spacer layer 2 has a depth value substantially greater than the depth of focus of the focused radiation beam, which preferably lies within a range of [0.03 mm, 0.07 mm] and more preferably is equal to 0.05 mm.

An optical disc in accordance with an embodiment of the invention may be manufactured as follows: the polycarbonate substrate 1 is molded by a stamper, which creates grooves G in the substrate 1. The organic dye material intended to form the higher recording layer $L_0$ is applied, for example, by means of spin-coating onto the pre-grooved substrate 1. Next, a semitransparent mirror made of silver alloy, called thin metal reflector layer $M_0$, is applied, for example by sputtering. On top of the thin metal layer $M_0$, a spacer layer 2 is fabricated by applying a UV-curable lacquer. The grooves G of the substrate 1 are replicated in the lacquer by pressing a stamper (for example of Zeonor). The lacquer is subsequently exposed to UV in order to cure it. On top of the grooves of the spacer layer 2, a new dye-based recording layer $L_1$ is applied. Next, a thick metal reflector layer $M_1$ is applied. The optical disc is finalized by gluing a dummy substrate 3 to the back of the thick metal layer.

An advantage of the use of a higher recording layer made of organic dye is that the organic dye can be applied by spin-coating, whereas the MIM structure requires additional sputter deposition steps for the interference layer and the thin metal recording layer. Spin-coating is easier to implement than sputtering. The fabrication procedure for the optical storage medium in accordance with the invention is therefore cheaper.

It is to be noted that the above-mentioned manufacturing method relates to dual-stack optical media, but that those skilled in the art should be able to derive a similar method for multi-stack optical media.

Fig. 3b shows the differences in optical path length transmitted through an empty groove 20, a land 21, and a recorded groove 22. In the case of a dye-based recording stack $ST_0$, the fact that the first recording layer $L_0$ comprises grooves and lands, also called leveling, introduces three different phases in transmission, which are a phase of land $\Phi_L$ of the focused optical beam 24 when passing trough a land 21, a phase of empty groove $\Phi_{GE}$ of the focused optical beam 23 when passing trough an empty groove 20, and a phase of recorded groove $\Phi_{GR}$ of the focused optical beam 25 when passing trough a recorded groove 25. The obtained phase differences are the following:

- $\Phi_{GE} - \Phi_{GR} = \Delta n_R.d_G$, (EQ$_2$), where $d_G$ is the groove depth 13 and $\Delta n_R$ the variation of the refractive index $n_R$ of the dye-based recording layer.
- $\Phi_{GE} - \Phi_L = (n_R - n_0).(d_G - d_L)$ (EQ$_3$), where no is the refractive index of the substrate 1 and $d_L$ the land depth 14,

$$- \quad \Phi_L - \Phi_{GR} = \Delta n_R.d_G - (n_R - n_0).(d_G - d_L) \ (EQ_4).$$

Equation EQ$_2$ is equivalent to equation EQ$_1$. Another point is that a phase difference smaller than $0.125._\lambda$ is required for these three equations. However, with dye-based recording materials, $\Delta nR \approx n_R - n_0$. Consequently, it turns out that the largest phase difference is given by equations EQ$_1$ and EQ$_2$, which means that only EQ$_1$ needs to be considered in the design of the first recording layer $L_0$.

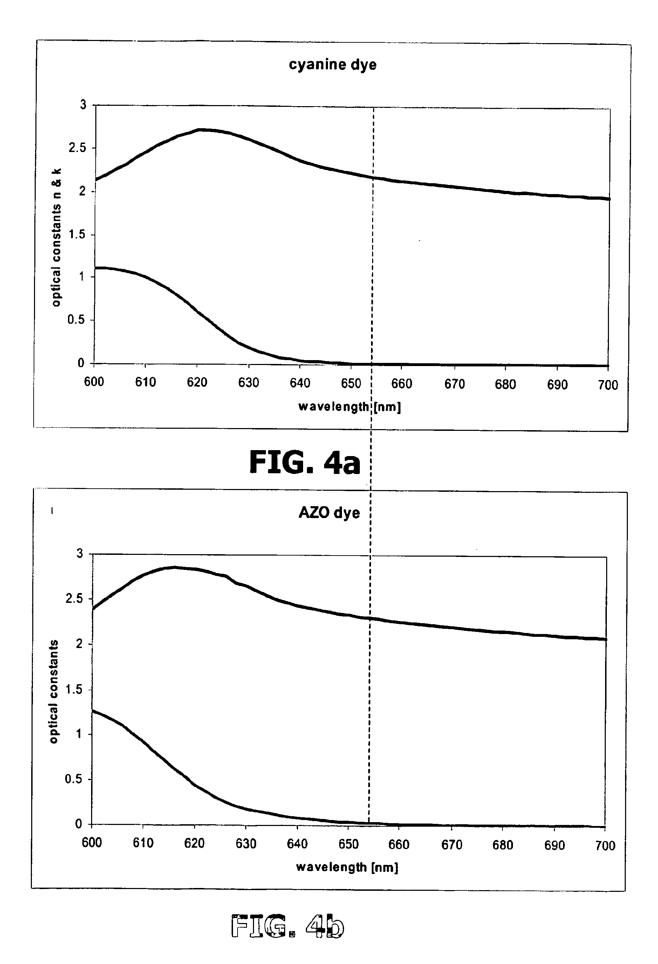

Figs. 4a and 4b show the optical constants of two types of organic dye materials as functions of the wavelength $\lambda$. The optical constant of a material is the complex refractive index $\tilde{n} = n + i.k$. In the embodiment of the invention, the wavelength $\lambda$ equals 655 nm and either an AZO dye material with a real part $n_{R1}$ of the refractive index approximately equal to 2.3 or a cyanine dye material with a real part $n_{R2}$ of the refractive index equal to 2.2 is used. When data are recorded into the recording layer, the refractive index falls to approximately 1.6.

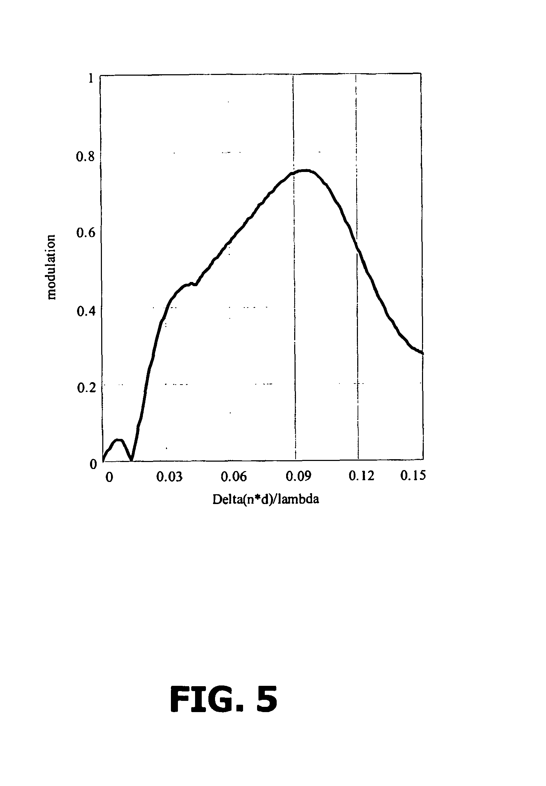

Fig. 5 shows the modulation as a function of the product of the refractive index variation and the thickness of the first recording layer. For DVDs, the modulation is expected to remain greater than 0.6. For other applications, values lower than 0.6 may be acceptable.

It turns out that choosing a first recording layer $L_0$ with a thickness $\Delta n_R.d_R$ greater than $0.06.\lambda$ guarantees a modulation value above 0.6.

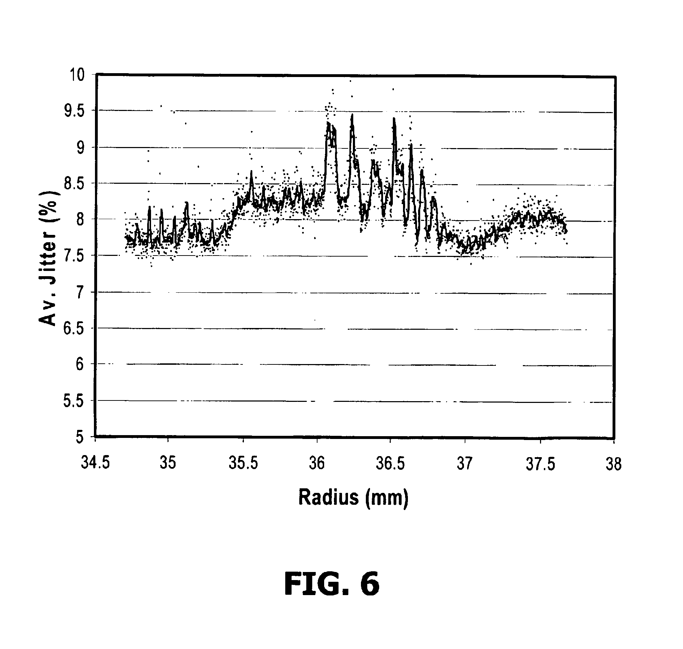

Fig. 6 shows a diagram indicating jitter measurements of data read back from the second recording layer $L_1$ through the partially recorded recording layer $L_0$. Gray bands indicate the radii of the optical disk for which data have been recorded on the first recording layer $L_0$.

In optical disks, data are encoded in the lengths of pits and of the unrecorded areas that are in between the pits, also called spaces, that are recorded on the disk. It should be noted that the actual recording of marks does not necessarily take place in the groove G but may take place in the area L between grooves, also referred to as lands. On this case the guide groove G merely serves as a servo tracking means with the actual radiation beam recording spot being present on the land.

A length should be an integer multiple of a predefined channel bit length. For example, the predefined channel bit length equals 146.7 nm for a dual-layer density DVD. Since it is not possible to record such a length precisely, an evaluation of the error made in the recording of the lengths is highly needed.

A possible measurement of such an error is provided by the jitter. The jitter is defined as the width of the distribution of the leading and trailing edges of the pits and spaces with respect to the expected or ideal positions of these edges, which is given by the predefined channel bit length. What is actually measured in the experiments is the distribution in timing errors of the leading and trailing edges of the signals coming from the disk during read-out with respect to the expected timing. Said timing is given by the ratio of the bit length and the read velocity. The average jitter curve 30 shows that the recording of the first recording layer $L_0$ of an optical storage medium according to the invention only causes a small increase of the jitter values, which corresponds to only small deteriorations of the conditions for reading the second recording layer $L_1$.

It should be noted that the above-mentioned embodiments illustrate rather than limit the invention, and that those skilled in the art will be able to design many alternative embodiments without departing from the scope of the appended claims. In the claims, any reference signs places between parentheses shall not be construed as limiting the claims. The word "comprising" does not exclude the presence of elements or steps other than those listed in a claim. The word "a" or "an" preceding an element does not exclude the presence of a plurality of such elements. The mere fact that certain measures are recited in mutually different dependent claims does not indicate that a combination of these measures cannot be used to advantage.

## Claims

1. An optical storage medium, which has the DVD format, comprising below an entrance face (EF) a pre-grooved semi-transparent or transparent substrate (1), a higher recording stack ($ST_0$) comprising a higher recording layer ($L_0$), said higher recording layer ($L_0$) being formed on said pre-grooved substrate (1), comprising an organic dye material and having a thickness $d_R$ on groove (13) being equal to or greater than 28 nm and equal to or less than 115 nm and a refractive index $n_R$, wherein said higher recording layer ($L_0$) is not a recording layer ($L_0$) comprising AZO dye material and having a thickness $d_R$ on groove (13) of 80 nm, said optical storage medium further comprising at least a lower recording stack ($ST_1$), said lower recording stack ($ST_1$) being recorded or read back by a radiation beam (4) entering the optical storage medium through the entrance face (EF) with a wavelength ($\lambda$), focused on said lower recording stack ($ST_1$), and transmitted through the higher recording stack ($ST_0$), a recording of the higher recording layer ($L_0$) causing an optical thickness variation $\Delta(n_R.d_R)$ between recorded and unrecorded areas of said higher recording layer ($L_0$), which lies within the range $[0.03\lambda, 0.125\lambda]$, wherein said wavelength ($\lambda$) is approximately equal to 655 nm.

2. An optical storage medium according to claim 1, wherein said higher recording stack ($ST_0$) comprises a metal reflector layer ($M_0$).

3. An optical storage medium according to claim 1, wherein said lower recording stack ($SR_1$) comprises a lower recording layer ($L_1$) comprising an organic dye material and a metal reflector layer ($M_1$).

4. An optical storage medium according to claim 2, wherein said metal reflector layer ($M_o$) has a thickness ($d_{Mo}$) which is greater than 5 and less than 25 nm and is made of a silver alloy.

5. An optical storage medium according to claim 1, wherein said semi-transparent or transparent substrate (1) having a thickness ($d_1$) which is greater than 0.3 and less than 1.2 mm.

**6.** A method of manufacturing an optical storage medium, which has the DVD format, comprising a higher recording layer ($L_0$) and at least a lower recording layer ($L_1$), said lower recording layer ($L_1$) being recorded or read back by means of a focused radiation beam with a wavelength ($\lambda$), said method of manufacturing comprising the steps of:

      - Forming a pre-grooved semi-transparent or transparent substrate (1),
      - Depositing an organic dye onto the pre-grooved substrate (1) for forming the higher recording layer ($L_0$) having a thickness $d_R$ on groove (13) being equal to or greater than 28 nm and equal to or less than 115 nm, wherein said higher recording layer ($L_0$) is not a recording layer ($L_0$) comprising AZO dye material and having a thickness $d_R$ on groove (13) of 80 nm, such that a recording of said higher recording layer ($L_0$) causes an optical thickness variation between recorded and unrecorded areas of said higher recording layer ($L_0$), which lies within the range [0.03$\lambda$, 0.125$\lambda$], wherein said wavelength ($\lambda$) is approximately equal to 655 nm.

**Patentansprüche**

**1.** Optisches Datenspeichermedium, welches das DVD-Format hat, wobei dieses Medium unten eine Eingangsseite (EF), ein vorgerilltes halbtransparentes oder transparentes Substrat (1), einen oberen Aufzeichnungsstapel ($ST_0$) mit einer oberen Aufzeichnungsschicht ($L_0$) aufweist, wobei die genannte obere Aufzeichnungsschicht ($L_0$) auf dem genannten vorgerillten Substrat (1) liegt, das ein organisches Farbmaterial aufweist und eine Dicke $d_R$ in der Rille (13) hat, die gleich 28 nm oder größer und gleich oder kleiner als 115 nm ist, und eine Brechzahl $n_R$ hat, wobei die genannte obere Aufzeichnungsschicht ($L_0$) nicht eine Aufzeichnungsschicht ($L_0$) mit AZO Farbmaterial ist und eine Dicke $d_R$ in der Rille (13) von 80 nm hat, wobei das genannte optische Speichermedium weiterhin wenigstens einen unteren Aufzeichnungsstapel ($ST_1$) hat, wobei der genannte untere Aufzeichnungsstapel ($ST_1$) durch ein Strahlungsbündel (4) aufgezeichnet oder ausgelesen wird, wobei dieses Bündel durch die Eingangsseite (EF) mit einer Wellenlänge ($\lambda$) hindurch in das optische Speichermedium eintritt, und zwar fokussiert auf den genannten unteren Aufzeichnungsstapel ($ST_1$), und durch den oberen Aufzeichnungsstapel ($ST_0$) hindurch übertragen, wobei eine Aufzeichnung der oberen Aufzeichnungsschicht ($L_0$) eine optische Dickenvariation $\Delta(N_R.d_R)$ zwischen aufgezeichneten und nicht aufgezeichneten Gebieten der oberen Aufzeichnungsschicht ($L_0$) verursacht, wobei diese Variation in dem Bereich [0,03 $\lambda$, 0,125 $\lambda$] liegt, wobei die genannte Wellenlänge ($\lambda$) nahezu gleich 655 nm beträgt.

**2.** Optisches Speichermedium nach Anspruch 1, wobei der genannte obere Aufzeichnungsstapel ($ST_0$) eine metallische Reflektorschicht ($M_0$) aufweist.

**3.** Optisches Speichermedium nach Anspruch 1, wobei der genannte untere Aufzeichnungsstapel ($ST_1$) eine untere Aufzeichnungsschicht ($L_1$) mit einem organischen Farbmaterial und einer metallischen Reflektorschicht ($M_1$) aufweist.

**4.** Optisches Speichermedium nach Anspruch 2, wobei die genannte metallische Reflektorschicht ($M_0$) eine Dicke ($d_{M0}$), größer als 5 und kleiner als 25 nm, aufweist und aus einer Silberlegierung hergestellt ist.

**5.** Optisches Speichermittel nach Anspruch 1, wobei das genannte halbtransparente oder transparente Substrat (1) mit einer Dicke ($d_1$), die größer als 0,3 mm und kleiner als 1,2 mm ist.

**6.** Verfahren zum Herstellen eines optischen Speichermediums, welches das DVD-Format aufweist, mit einer oberen Aufzeichnungsschicht ($L_0$) und wenigstens einer unteren Aufzeichnungsschicht ($L_1$), wobei die genannte untere Aufzeichnungsschicht ($L_1$) mit Hilfe eines fokussierten Strahlungsbündels mit einer Wellenlänge ($\lambda$) aufgezeichnet oder ausgelesen wird, wobei das genannte Herstellungsverfahren die nachfolgenden Verfahrensschritte umfasst:

      - das Bilden eines vorgerillten halbtransparenten oder transparenten Substrats (1),
      - das Ablagern eines organischen Farbstoffs auf dem vorgerillten Substrat (1) zum Bilden der oberen Aufzeichnungsschicht ($L_0$) mit einer Dicke $d_R$ in der Rille (13), gleich oder größer als 28 nm und gleich oder kleiner als 115 nm, wobei die genannte obere Aufzeichnungsschicht ($L_0$) nicht eine Aufzeichnungsschicht ($L_0$) mit AZO Farbmaterial ist und mit einer Dicke $d_R$ in der Rille (13) von 80 nm, so dass eine Aufzeichnung der genannten oberen Aufzeichnungsschicht ($L_0$) eine optische Dickenvariation zwischen aufgezeichneten und nicht aufgezeichneten Gebieten der genannten oberen Aufzeichnungsschicht verursacht, die in dem Bereich [0,03$\lambda$, 0,125 $\lambda$] liegt, wobei die genannte Wellenlänge ($\lambda$) nahezu gleich 655 nm beträgt.

**Revendications**

1. Support de stockage optique qui présente le format DVD, comprenant au-dessous d'une face d'entrée (EF) un substrat semi-transparent ou transparent préliminairement rainuré (1), une pile d'enregistrement supérieure ($ST_0$) comprenant une couche d'enregistrement supérieure ($L_0$), ladite couche d'enregistrement supérieure ($L_0$) étant formée sur ledit substrat préliminairement rainuré (1), comprenant un matériau de colorant organique et ayant une épaisseur $d_R$ sur une rainure 13 qui est égale ou supérieure à 28 nm et qui est égale ou inférieure à 115 nm et un indice de réfraction $n_R$ où ladite couche d'enregistrement supérieure ($L_0$) n'est pas une couche d'enregistrement ($L_0$) comprenant un matériau de colorant AZO et ayant une épaisseur $d_R$ sur la rainure (13) qui est égale à 80 nm, ledit support de stockage optique comprenant en outre au moins une pile d'enregistrement inférieure ($ST_1$), ladite pile d'enregistrement inférieure ($ST_1$) étant enregistrée ou relue par un faisceau de rayonnement (4) qui entre dans le support de stockage optique à travers la face d'entrée (EF) avec une longueur d'onde ($\lambda$), qui est focalisé sur ladite pile d'enregistrement inférieure ($ST_1$) et qui est transmis à travers la pile d'enregistrement supérieure ($ST_0$), un enregistrement de la couche d'enregistrement supérieure ($L_0$) causant une variation d'épaisseur optique $\Delta(n_R \cdot d_R)$ entre des zones enregistrées et non enregistrées de ladite couche d'enregistrement supérieure ($L_0$) qui se situe dans la gamme ($0,03\lambda$, $0,125\lambda$) dans laquelle ladite longueur d'onde ($\lambda$) est environ égale à 655 nm.

2. Support de stockage optique selon la revendication 1, dans lequel ladite pile d'enregistrement supérieure ($ST_0$) comprend une couche réflectrice métallique ($M\lambda$).

3. Support de stockage optique selon la revendication 1, dans lequel ladite pile d'enregistrement inférieure ($ST_1$) comprend une couche d'enregistrement inférieure ($L_1$) comprenant un matériau de colorant organique et une couche réflectrice métallique ($M_1$).

4. Support de stockage optique selon la revendication 2, dans lequel ladite couche réflectrice métallique ($M_0$) présente une épaisseur ($d_{M0}$) qui est supérieure à 5 nm et qui est inférieure à 25 nm et qui est fabriquée à partir d'un alliage d'argent.

5. Support de stockage optique selon la revendication 1, dans lequel ledit substrat semi-transparent ou transparent (1) présente une épaisseur ($d_1$) qui est supérieure à 0,3 nm et qui est inférieure à 1,2 nm.

6. Procédé de fabrication d'un support de stockage optique qui présente le format DVD, comprenant une couche d'enregistrement supérieure ($L_0$) et au moins une couche d'enregistrement inférieure ($L_1$), ladite couche d'enregistrement inférieure ($L_1$) étant enregistrée ou relue au moyen d'un faisceau de rayonnement focalisé avec une longueur d'onde ($\lambda$), ledit procédé de fabrication comprenant les étapes suivantes consistant à:

   - former un substrat semi-transparent ou transparent préliminairement rainuré (1),
   - déposer un colorant organique sur le substrat préliminairement rainuré (1) pour former la couche d'enregistrement supérieure ($L_0$) ayant une épaisseur $d_R$ sur la rainure 13 qui est égale ou supérieure à 28 nm et qui est égale ou inférieure à 115 nm où ladite couche d'enregistrement supérieure ($L_0$) n'est pas une couche d'enregistrement ($L_0$) comprenant un matériau de colorant AZO et ayant une épaisseur $d_R$ sur la rainure (13) qui est égale à 80 nm de telle façon qu'un enregistrement de ladite couche d'enregistrement supérieure ($L_0$) cause une variation d'épaisseur optique entre des zones enregistrées et non enregistrées de ladite couche d'enregistrement supérieure ($L_0$) qui se situe dans la gamme ($0,03\lambda$, $0,125\lambda$) dans laquelle ladite longueur d'onde ($\lambda$) est environ égale à 655 nm.

**FIG. 1a**

**FIG. 1b**

**FIG. 2**

**FIG. 3a**

**FIG. 3b**

**FIG. 4a**

**FIG. 4b**

**FIG. 5**

**FIG. 6**

**EP 1 634 282 B1**

**REFERENCES CITED IN THE DESCRIPTION**

**Patent documents cited in the description**

- EP 1067535 A
- JP 5073955 A
- US 2002150030 A1
- EP 1174868 A2
- WO 03083845 A
- WO 03107334 A
- WO 2004042717 A
- WO 2004021336 A
- EP 1187119 A2